# EUROPEAN PATENT APPLICATION

(11) **EP 0 679 478 A1**
(43) Date of publication of application: **02.11.1995**
(21) Application number: 95201005.6
(22) Date of filing: 19.04.1995
(51) Int. Cl.: B25C 3/00, B25C 1/02, F16B 15/02

(54) **Nail system, and nail hammering tool therefor**

(30) Priority: 26.04.1994 NL 9400669
(71) Applicant: J.H. DE WIT EN ZONEN B.V., NL-5700 AB Helmond (NL)
(72) Inventor: Thoolen, Wilhelm Franciscus, NL-6077 CG St. Odilienberg (NL)
(74) Representative: de Bruijn, Leendert C.

(57) **Abstract**

A nail system comprises at least one fixing nail (2) which has a supporting flange (9) and a head (10) which is raised relative to the supporting flange (9), and also a hammering tool (1) which has at one end a supporting face (13) for the supporting flange (9) of the fixing nail (2), in which supporting face (13) a recess (12) provided with a clamping element (15) opens out, in which recess (12) the head (10) of the nail (2) can be clamped, and which hammering tool (1) has at the opposite end an end face (6) on which hammering forces can be exerted for driving the nail (2) into a substrate. According to the invention, the greatest distance between the position where the clamping element (15) can act upon the head (10) of the fixing nail (2), on the one hand, and the supporting face (9), on the other, is smaller than the transverse measurement of the recess (12), in such a way that the nail system is also suitable for exposed nails.

## Description

The invention relates to a nail system comprising at least one fixing nail which has a supporting flange and a head which is raised relative to the supporting flange, and also a hammering tool which has at one end a supporting face for the supporting flange of the fixing nail, in which supporting face a recess provided with a clamping element opens out, in which recess the head of the nail can be clamped, and which hammering tool has at the opposite end an end face on which hammering forces can be exerted for driving the nail into a substrate.

Such nail systems are known. They are used in particular for fixing construction parts such as plates on a substrate of stone, concrete or steel. The nail is fitted in the hammering tool beforehand, and is then driven in by means of hammering forces exerted with a hammer. The advantage obtained here is that drilling a hole beforehand, which is the usual practice for fitting a plug, is no longer necessary.

It must be possible to retain the nail sufficiently stably in the hammering tool, in such a way that the correct guidance is ensured even when the nail is being driven into a hard substrate. There must therefore not be too much play between the nail and the recess in the hammering tool, while the head and the supporting flange of the nail, on the one hand, and the shape of the recess and the supporting face of the hammering tool, on the other, must also be matched in such a way that optimum force transmission is ensured.

Due to the fact that the nail can be retained in the hammering tool, the system is also suitable for so-called underhand fitting, i.e. with the nail directed downwards, as is the case when one is working on a floor.

In that connection, the head of the nail is important. It must be able to project far enough into the recess of the hammering tool, in such a way that it can be clamped stably in the correct way. However, in the case of the known hammering systems the head of the nail is so large in size that it is not suitable for use as an exposed nail, i.e. as a nail which remains visible after fitting and/or projects the least possible.

The object of the invention is therefore to provide a nail system of the type described above which does not have this disadvantage. That object is achieved through the fact that the greatest distance between the position where the clamping element can act upon the head of the fixing nail, on the one hand, and the supporting face, on the other, is smaller than the transverse measurement of the recess.

In the case of such a nail system it is also possible to use nails in which the head projects over a relatively short distance. This means that the nail system according to the invention is also suitable for exposed nails. In this case the height of the head of the nail with respect to the supporting flange thereof can be 0.5 - 1.5 times the size of the transverse measurement of the head at the position where the clamping element acts thereon.

In order to increase the stability further, the transition region between the supporting flange and the head of the nail can be concave, and the transition region between the supporting face and the recess of the hammering tool can be correspondingly convex.

The nail can be clamped in various ways in the hammering tool. For this purpose, at the level of the recess the hammering tool is preferably provided with a transverse hole which intersects the recess tangentially, which hole contains a clamping element which at the position of the intersection can interact with the head of a nail.

Such a transverse hole hardly weakens the bearing area of the hammering tool which has to transmit the hammering forces to the nail. There is therefore no risk of the hammering tool breaking off or being smashed.

In a preferred embodiment the hammering tool is provided with an external peripheral groove, in which the transverse hole opens out, which peripheral groove contains a ring made of resilient material, which ring has at one end a tangentially inward projecting leg which is accommodated in the transverse hole.

The invention also relates to a nail for a nail system of the type described above, comprising a supporting flange and a head which is raised relative to said supporting flange. According to the invention, provision is made for the height of the head of the nail with respect to the supporting flange thereof to be 0.5 - 1.5 times the size of the transverse measurement of the head at the position where the clamping element of a hammering tool can act thereon. On account of the small dimensions of its head, such a nail is particularly suitable as an exposed nail.

The invention also relates to a hammering tool for such a nail system, which hammering tool at one end has a supporting face for the supporting flange of the fixing nail, in which supporting face a recess provided with a clamping element opens out, in which recess the head of a nail can be clamped, and which hammering tool at the opposite end has an end face on which hammering forces can be exerted for driving the nail into a substrate. According to the invention, the greatest distance between the position where the clamping element can act upon the head of the fixing nail, on the one hand, and the supporting face, on the other, is smaller than the transverse measurement of the recess.

A hammering tool which is strong enough to withstand the hammering forces is obtained if at the level of the recess a transverse hole which tangentially intersects the recess is provided, which hole contains a clamping element which can interact with the head of a nail at the position of the intersection.

An exemplary embodiment of the nail system according to the invention will be explained in greater detail below with reference to the figures.

Figure 1 shows a view in perspective of a nail system according to the invention, for fitting a pipe on a substrate.

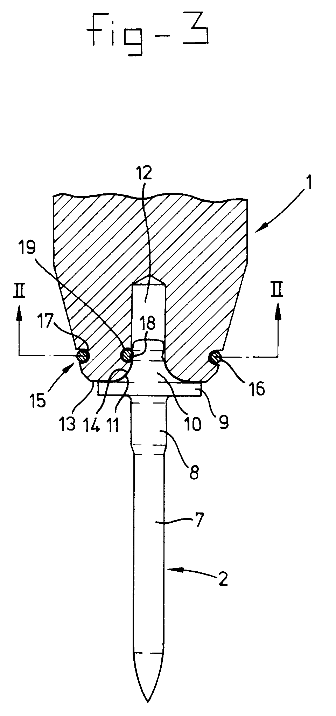

Figure 2 shows a cross-section of the nail system along the line II-II of Figure 3.

Figure 3 shows a side view, partially in section, of the nail system according to the invention.

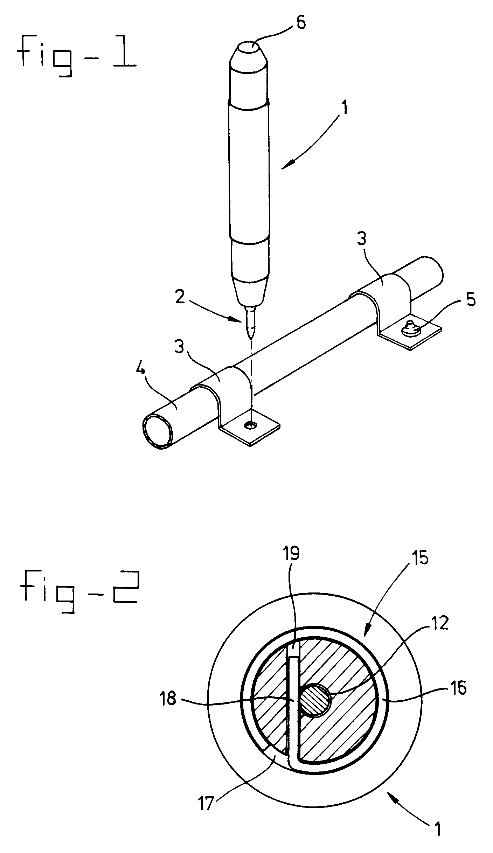

The nail system shown in Figure 1 comprises a hammering tool, indicated in its entirety by 1, and containing a nail 2. The nail system can be used for fixing the brackets 3 on a substrate. A pipe 4 is being fixed by means of these brackets 3 in the example shown.

A nail 5 has already been hammered into one of the brackets. The second bracket 3 still has to be fixed with the nail 2. For this purpose, said nail is set with its point in the hole in the bracket 3, and the end face 6 of the hammering tool 1 is then struck with a hammer, in such a way that the nail 2 can be driven into the substrate in a stable manner.

As can be seen in Figure 3, the nail 2 has a shank 7, which has a thickened part 8 near the flange 9. At the side of the flange 9 facing away from the shank 7 the nail bears a head 10, which merges into the flange 9 by way of a regularly curved periphery 11.

The hammering tool 1 has a hole 12 which opens out onto a supporting face 13 of the hammering tool 1. The hole 12 is provided near its mouth with a curvature 14, by means of which it merges into the supporting face 13. Said curvature 14 corresponds to the curvature 13 of the periphery 11 of the nail head 10.

The shape of flange 9 and the curvature of periphery 11 of the nail 2 at one side and the shape of the supporting face 13 and the curved part 14 of the hole 12 connecting thereto match each other fairly accurately, in such a way that a good force transmission and stable support of the nail 2 in the hammering tool 1 is ensured.

In order to prevent the nail 2 from falling out of the hammering tool 1, a spring element, indicated in its entirety by 15, is provided. Said spring element has a part 16 virtually forming a full circle, which is accommodated in a peripheral groove 17 of the hammering tool. At its one end the spring element 15 has a tangentially inward projecting leg 18. Said leg 18 runs through a hole 19 in the hammering tool 1. The position of hole 19 is selected in such a way that it opens out tangentially in the hole 12, in which the head 10 of the nail 2 is to be accommodated.

The leg 18 now rests resiliently in the direction of the hole 12. The result of this is that, as soon as the head 10 of nail 2 is inserted into the hole 12, the leg 18 is forced a little to the side. The result is that the head 10 of nail 2 is retained resiliently, and the nail 2 cannot fall out of the hammering tool 1.

When hammering forces are exerted on the hammering tool 1, they are transmitted by way of the supporting face 13 to the flange 9. Force is also transmitted by way of the curved regions of hammering tool 1 and head 10. It is thus important that as much material as possible should be present in the adjoining areas of the hammering tool 1, in order to transmit the forces correctly. In that connection the slight material reduction of the cross-section of the hammering tool 1 at the position of the tangential hole 19 is not important, since the major part of the cross-section of the hammering tool 1 at the level of said hole 19 is still intact. It need not therefore be feared that the hammering tool 1 will break off, or that there will be such deformations of the hole 19 that the leg 18 becomes jammed.

Since these measures mean that the clamping element 15, and in particular the leg 19 thereof, can be placed until fairly close up to the supporting face 13 of the hammering tool 1, without the hammering tool 1 being inadmissibly weakened as a result, the head 10 of the nail can also remain quite small, in such a way that so-called exposed nails can also be handled with this hammering tool 1.

## Claims

1. Nail system comprising at least one fixing nail which has a supporting flange and a head which is raised relative to the supporting flange, and also a hammering tool which has at one end a supporting face for the supporting flange of the fixing nail, in which supporting face a recess provided with a clamping element opens out, in which recess the head of the nail can be clamped, and which hammering tool has at the opposite end an end face on which hammering forces can be exerted for driving the nail into a substrate, characterized in that the greatest distance between the position where the clamping element can act upon the head of the fixing nail, on the one hand, and the supporting face, on the other, is smaller than the transverse measurement of the recess.

2. Nail system according to Claim 1, in which the height of the head of the nail with respect to the supporting flange thereof is 0.5 - 1.5 times the size of the transverse measurement of the head at the position where the clamping element acts thereon.

3. Nail system according to Claim 1 or 2, in which the transition region between the supporting flange and the head of the nail is concave, and the transition region between the supporting face and the recess of the hammering tool is correspondingly convex.

4. Nail system according to Claim 1, 2 or 3, in which at the level of the recess the hammering tool is provided with a transverse hole which intersects the recess tangentially, which hole contains a clamping element which at the position of the intersection can interact with the head of a nail.

5. Nail system according to Claim 4, in which the hammering tool is provided with an external peripheral groove, in which the transverse hole opens out, and which peripheral groove contains a ring made of resilient material, which ring has at one end a tangentially inward projecting leg which is accommodated in the transverse hole.

6. Nail for a nail system according to one of the preceding claims, comprising a supporting flange and a head which is raised relative to said supporting flange, characterized in that the height of the head of the nail with respect to the supporting flange thereof is 0.5 - 1.5 times the size of the transverse measurement of the head at the position where the clamping element of a hammering tool can act thereon.

7. Nail according to Claim 6, in which the head is cylindrical at the position where the clamping element can act thereon.

8. Nail according to Claim 6 or 7, in which the shank is thickened in the region situated near the supporting flange.

9. Hammering tool for a nail system according to one of Claims 1 - 5, which hammering tool at one end has a supporting face for the supporting flange of the fixing nail, in which supporting face a recess provided with a clamping element opens out, in which recess the head of a nail can be clamped, and which hammering tool at the opposite end has an end face on which hammering forces can be exerted for driving the nail into a substrate, characterized in that the greatest distance between the position where the clamping element can act upon the head of the fixing nail, on the one hand, and the supporting face, on the other, is smaller than the transverse measurement of the recess.

10. Hammering tool according to Claim 9, in which at the level of the recess a transverse hole which tangentially intersects the recess is provided, which hole contains a clamping element which can interact with the head of a nail at the position of the intersection.

11. Hammering tool according to Claim 10, in which an external peripheral groove is provided, in which peripheral groove the transverse hole opens out, and which peripheral groove contains a ring made of resilient material, which ring has at one end a tangentially inward projecting leg which is accommodated in the transverse hole.
